# FASCICULE DE BREVET EUROPEEN

(11) **EP 3 256 303 B1**
(45) Date de publication et mention de la délivrance du brevet: **26.12.2018**
(21) Numéro de dépôt: 16709988.6
(22) Date de dépôt: 05.02.2016
(51) Int. Cl.: B29C 45/14, B29C 33/00, B29C 33/12, B29C 33/20

(54) **ENSEMBLE DE MOULAGE ET PROCÉDÉ DE FABRICATION D'UN CORPS DE SERINGUE**
WERKZEUGVORRICHTUNG UND PROZESS ZUR HERSTELLUNG EINES SPRITZENKÖRPERS
MOULDING APPARATUS AND PROCESS FOR THE PRODUCTION OF A SYRINGE BODY

(30) Priorité: 06.02.2015 FR 1550953
(43) Date de publication de la demande: 20.12.2017
(73) Titulaire: APTAR France SAS, 27110 Le Neubourg (FR)
(72) Inventeur: HUBERT, Thierry, 72600 Saint Remy Du Val (FR); HÉBERT, Vincent, 76520 Ymare (FR); HIS, Olivier, 27430 Saint Etienne Du Vauvray (FR)
(74) Mandataire: CAPRI
(86) Numéro de dépôt international: PCT/FR2016/050251
(87) Numéro de publication internationale: WO 2016/124869

(56) Documents cités:
- DE-C1- 4 140 099
- US-A1- 2010 270 702
- US-A1- 2014 070 453

## Description

La présente invention concerne un ensemble de moulage et un procédé de fabrication d'un corps de seringue.

Les seringues sont bien connues dans l'état de la technique. Ces dispositifs comportent un corps de forme principalement cylindrique, recevant d'un côté une canule formant aiguille, pour percer le site d'injection et distribuer un produit fluide dans ledit site d'injection, et pourvu de l'autre côté d'un bouchon piston, qui au repos maintient le produit à distribuer dans ledit corps et qui en utilisation coulisse de manière étanche dans ledit corps pour distribuer ledit produit fluide à travers ladite canule.

L'assemblage d'une canule sur un corps de seringue est une étape cruciale dans la fabrication de seringues. La canule doit être positionnée avec précision et ensuite fixée à la seringue sans être endommagée. La canule doit être alignée avec l'axe central de la seringue. La canule doit également être fixée à la seringue de manière suffisamment forte pour résister aux exigences réglementaires. La canule peut être insérée en ajustement serré dans le corps de seringue préformé. Cette mise en oeuvre est difficile à maitriser, en particulier avec des canules de faible diamètre. La canule peut aussi être fixée au corps de seringue par un adhésif. Cependant, il n'est généralement pas souhaitable d'utiliser un tel adhésif pour fixer une canule d'une seringue, car l'adhésif peut contenir des produits chimiques toxiques qui pourraient s'infiltrer dans le contenu de la seringue, ce qui pourrait perturber l'efficacité et/ou la stabilité du contenu de la seringue.

Dans certains cas, notamment lorsque le corps est réalisé en matériau synthétique et non en verre, la canule peut être assemblée sur ledit corps par surmoulage, c'est-à-dire par injection du corps de seringue sur ladite canule, ce qui permet notamment d'éviter l'utilisation d'un adhésif, et permet de garantir une fixation résistante. Les documents US 2010/270 702, EP 2 229 197 et WO 2012 150 897 décrivent des ensembles de moulage et des procédés de fabrication de ce type, comprenant une pince pour la canule et un moule d'injection du corps de seringue sur ladite canule.

Ces ensembles de moulage utilisés pour réaliser ce type de procédé de surmoulage présentent toutefois des inconvénients. Ainsi, dans le document EP2229197, l'ouverture et la fermeture de la pince sont corrélés avec l'ouverture/fermeture du moule. Cette pince permet donc de maintenir la canule dans le moule lors de l'injection mais ne permet pas d'acheminer la canule vers le moule, puisque hors du moule la pince est ouverte et donc la canule n'est pas maintenue. Ce système est donc un système de maintien uniquement. D'autres moyens doivent donc être mis en oeuvre pour positionner la canule dans le logement du moule, tel qu'un robot, ce qui complexifie l'ensemble. Dans le document WO2012150897, le système de pince consiste en deux sous parties, chaque sous parties étant solidaire d'un demi moule. Cette description correspond à un moule en deux demi-coquilles. Dans ce cas, le système de pince est donc aussi seulement un système de maintien de la canule lors de l'injection, et d'autres moyens doivent être mis en oeuvre pour positionner la canule dans le logement du moule. Par ailleurs, avec un moulage en demi-coquille, il y a un risque d'apparition de défauts de moulage (infiltration, déformation) au niveau de la jonction des deux coquilles et notamment au niveau du moyeu de la seringue qui reçoit la canule et sur lequel un protège-aiguille devra faire l'étanchéité. Il y a donc un risque de perte d'étanchéité.

La présente invention a pour but de fournir un ensemble de moulage et un procédé de fabrication d'un corps de seringue qui ne reproduisent pas les inconvénients susmentionnés.

La présente invention a notamment pour but de fournir un ensemble de moulage et un procédé de fabrication d'un corps de seringue qui permettent de diminuer les étapes de transfert de la canule, pour ainsi notamment diminuer les risques d'endommagement de la canule.

La présente invention a également pour but de fournir un ensemble de moulage et un procédé de fabrication d'un corps de seringue qui permettent de limiter l'exposition de la canule aux contaminations extérieures.

La présente invention a aussi pour but de fournir un ensemble de moulage et un procédé de fabrication d'un corps de seringue qui permettent d'améliorer la précision de positionnement de la canule dans le moule pendant le moulage.

La présente invention a aussi pour but de fournir un ensemble de moulage et un procédé de fabrication d'un corps de seringue qui soient simples et peu coûteux à fabriquer et à mettre en oeuvre.

La présente invention a donc pour objet un ensemble de moulage pour fabriquer au moins un corps de seringue, chaque corps de seringue étant pourvu d'une canule, chaque corps de seringue comportant une partie cylindrique et une partie de moyeu sur laquelle est fixée ladite canule, l'ensemble de moulage comprenant :
au moins une unité de moule, chaque unité de moule comportant une première partie de moule, une seconde partie de moule déplaçable axialement par rapport à ladite première partie de moule entre une position d'ouverture et une position de fermeture, dans laquelle lesdites première et seconde parties de moule définissent entre elles une cavité de moule, et un noyau situé dans ladite cavité de moule pour définir la forme dudit corps de seringue ; et
au moins une unité de pince pour canule, chaque unité de pince comportant une pince déplaçable entre une position ouverte, dans laquelle une canule peut être chargée dans une extrémité axiale proximale de ladite pince, et une position fermée, dans laquelle ladite canule est maintenue dans ladite pince, ladite unité de pince étant déplaçable axialement par rapport à ladite unité de moule pour disposer une canule dans ladite cavité de moule, le déplacement de ladite pince entre ses positions ouverte et fermée étant indépendant du déplacement axial desdites première et seconde parties de moule entre les positions d'ouverture et de fermeture de ladite unité de moule.

Avantageusement, chaque unité de pince comporte un élément d'actionnement déplaçable axialement entre une position de fermeture et une position d'ouverture, ledit élément d'actionnement étant adapté à déplacer ladite pince entre lesdites positions fermée et ouverte.

Avantageusement, ledit élément d'actionnement comporte une extrémité axiale proximale tronconique coopérant avec une extrémité axiale distale de ladite pince, ladite extrémité axiale distale de ladite pince ayant une forme creuse conique complémentaire de ladite extrémité axiale proximale tronconique dudit élément d'actionnement, de sorte qu'un déplacement axial dudit élément d'actionnement provoque un déplacement radial de ladite pince entre lesdites positions fermée et ouverte.

Avantageusement, l'ensemble de moulage comporte au moins un organe de commande, tel qu'un vérin, coopérant avec ledit élément d'actionnement de ladite au moins une unité de pince pour le déplacer entre ses positions de fermeture et d'ouverture.

Avantageusement, chaque pince est élastiquement sollicitée vers sa position fermée.

Avantageusement, l'ensemble de moulage comprend en outre au moins une unité de chargement de canule adaptée à charger une canule respective dans une unité de pince respective.

Avantageusement, ladite au moins une unité de pince est montée sur un bras pendulaire adapté à déplacer transversalement, notamment par pivotement, ladite au moins une unité de pince entre une première position de chargement de canule, dans laquelle ladite au moins une unité de chargement de canule charge une canule respective dans ladite au moins une unité de pince, et une seconde position de moulage, dans laquelle ladite au moins une unité de pince est adaptée à disposer ladite canule dans une unité de moule respective.

Avantageusement, ledit ensemble de moulage comprend deux unités de moule, deux unités de chargement de canule et quatre unités de pince, lesdites quatre unités de pince étant montées deux à deux sur ledit bras pendulaire, de telle sorte qu'il y a toujours une unité de pince en face de chaque unité de chargement de canule et de chaque unité de moule.

Avantageusement, ledit ensemble de moulage comprend quatre organes de commandes, dont chacun coopère avec une première unité de pince dans ladite première position de chargement de canule dudit bras pendulaire et avec une seconde unité de pince dans ladite seconde position de moulage dudit bras pendulaire.

Avantageusement, ladite au moins une unité de chargement de canule est fixée sur ladite seconde partie de moule.

Avantageusement, chaque pince comporte un évidement recevant en toutes positions la pointe de perçage de la canule, de sorte qu'aucune contrainte n'est exercée sur ladite pointe de perçage lors du chargement de ladite canule dans ladite pince par ladite unité de chargement de canule, lors des déplacements de ladite pince et lors du moulage dudit corps de seringue autour de ladite canule par ladite unité de moule.

Avantageusement, chaque unité de moule comporte un organe de positionnement coopérant avec l'extrémité axiale de la canule opposée à ladite pointe de perçage pour assurer un positionnement précis de ladite canule dans ladite unité de moule pendant le moulage du corps de seringue.

La présente invention a aussi pour objet un procédé de fabrication d'un corps de seringue pourvu d'une canule, ledit corps de seringue comportant une partie cylindrique et une partie de moyeu sur laquelle est fixée ladite canule, ledit procédé comportant les étapes suivantes:
- fournir une unité de pince comportant une pince déplaçable entre une position fermée et une position ouverte,
- ouvrir ladite pince au moyen d'un élément d'actionnement de ladite unité de pince, ledit élément d'actionnement étant commandé par un organe de commande, tel qu'un vérin,
- charger une canule dans ladite pince ouverte au moyen d'une unité de chargement de canule,
- fermer ladite pince sur ladite canule,
- déplacer latéralement ladite unité de pince contenant ladite canule face à une unité de moule comportant une première partie de moule et une seconde partie de moule déplaçable axialement par rapport à ladite première partie de moule entre une position d'ouverture et une position de fermeture, dans laquelle lesdites première et seconde parties de moule définissent entre elles une cavité de moule, un noyau étant situé dans ladite cavité de moule pour définir la forme dudit corps de seringue,
- déplacer axialement ladite unité de pince contenant ladite canule par rapport à ladite unité de moule pour insérer ladite canule dans ladite unité de moule,
- injecter du matériau synthétique dans ladite unité de moule pour mouler ledit corps de seringue autour de ladite canule,
- ouvrir ladite pince au moyen dudit élément d'actionnement de ladite unité de pince, ledit élément d'actionnement étant commandé par un organe de commande, tel qu'un vérin, et
- ouvrir ladite unité de moule pour éjecter ledit corps de seringue moulé autour de ladite canule.

Selon une première variante avantageuse, ladite étape de déplacer axialement ladite unité de pince contenant ladite canule par rapport à ladite unité de moule pour insérer ladite canule dans ladite unité de moule est réalisée de la manière suivante:
- ouvrir ladite unité de moule en déplaçant axialement ladite seconde partie de moule par rapport à ladite première partie de moule,
- insérer ladite unité de pince dans ladite seconde partie de moule, et
- fermer ladite unité de moule en déplaçant axialement ladite seconde partie de moule ensemble avec ladite unité de pince par rapport à ladite première partie de moule.

Selon une seconde variante avantageuse, ladite étape de déplacer axialement ladite unité de pince contenant ladite canule par rapport à ladite unité de moule pour insérer ladite canule dans ladite unité de moule est réalisée de la manière suivante:
- fermer ladite unité de moule en déplaçant axialement ladite seconde partie de moule par rapport à ladite première partie de moule, et
- déplacer axialement ladite unité de pince contenant ladite canule par rapport à ladite unité de moule fermée pour insérer ladite canule dans ladite unité de moule.

Avantageusement, ladite étape de déplacer latéralement ladite unité de pince contenant ladite canule est réalisée au moyen d'un bras pendulaire, notamment pivotant.

Avantageusement, en position fermée de ladite pince, ladite canule peut être déplacée axialement par rapport à ladite pince.

Avantageusement, lorsque ladite canule est insérée dans ladite unité de moule, l'extrémité axiale de ladite canule opposée à ladite pointe de perçage coopère avec un organe de positionnement de ladite unité de moule pour assurer un positionnement précis de ladite canule dans ladite unité de moule pendant le moulage du corps de seringue.

Avantageusement, ladite pince comporte un évidement recevant en toutes positions la pointe de perçage de la canule, de sorte qu'aucune contrainte n'est exercée sur ladite pointe de perçage lors du chargement de ladite canule dans ladite pince par ladite unité de chargement de canule, lors des déplacements de ladite pince et lors du moulage dudit corps de seringue autour de ladite canule par ladite unité de moule.

Avantageusement, ladite étape d'ouvrir ladite pince pour charger ladite canule est réalisée par un premier organe de commande et ladite étape d'ouvrir ladite pince après moulage dudit corps de seringue est réalisée par un second organe de commande, lesdits organes de commande étant actionnés indépendamment l'un de l'autre, et indépendamment des déplacements de ladite unité de moule.

Avantageusement, ladite étape de fermer ladite pince est réalisée automatiquement, ladite pince étant élastiquement sollicitée vers sa position fermée.

Ces caractéristiques et avantages et d'autres de la présente invention apparaîtront plus clairement au cours de la description détaillée suivante, faite en référence aux dessins joints, donnés à titre d'exemples non limitatifs, et sur lesquels :
Les figures 1A et 1B sont des vues respectivement en perspective et en section transversale d'un ensemble de moulage selon un mode de réalisation avantageux de l'invention, en position fermée dudit ensemble de moulage,
La figure 2 est une vue de détail en section transversale de la pince en position fermée, sans canule,
La figure 3 est une vue en section transversale de la pince en position ouverte, avec canule,
La figure 4 est une vue similaire à celle de la figure 3, avec la pince en position fermée,
La figure 5 est une vue en section transversale de la pince en position de fermeture contenant une canule, avec la pince disposée à l'extérieur du moule,
La figure 6 est une vue en section transversale du moule en position d'ouverture, avec la pince en position fermée, avec canule,
La figure 7 est une vue similaire à celle de la figure 6, avec le moule en position de fermeture,
La figure 8 est une vue similaire à celle de la figure 7, en cours d'injection du corps de seringue,
La figure 9 est une vue similaire à celle de la figure 8, après injection du corps de seringue sur la canule, avec la pince en position ouverte, et
La figure 10 est une vue similaire à celle de la figure 9, avec le moule en position d'ouverture.

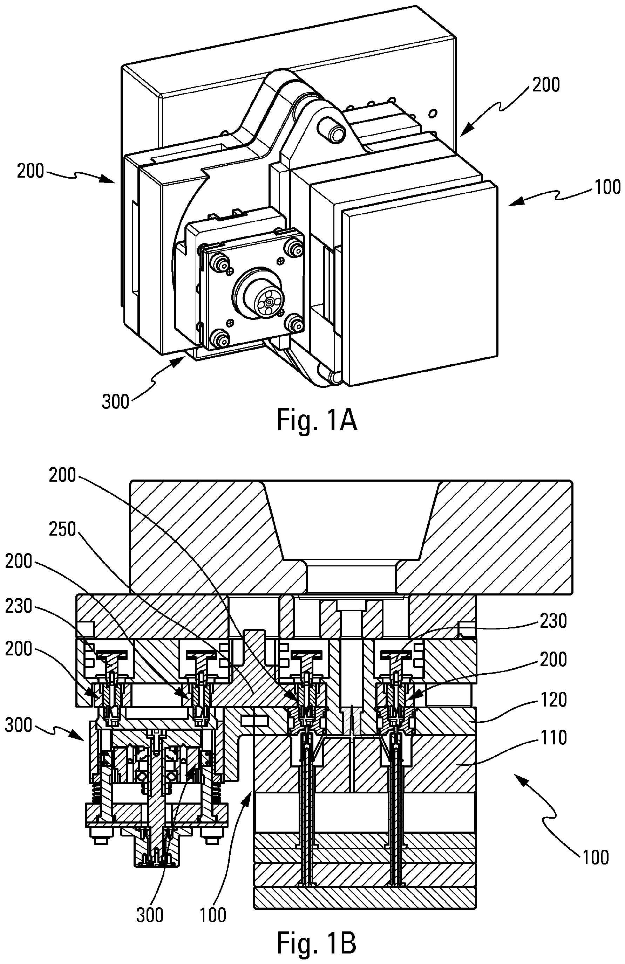

Dans la description ci-après, les termes "axial", "radial" et "transversal" se réfèrent à l'axe longitudinal de la canule dans l'unité de moule, c'est-à-dire l'axe vertical sur les figures 1B et 2 à 10. Les termes "proximal" et "distal" se réfèrent à la canule.

L'invention concerne plus particulièrement la fabrication d'un corps de seringue 10 pourvu d'une canule 20, ledit corps de seringue 10 comportant une partie cylindrique 11, formant réservoir, et une partie de moyeu 12 sur laquelle est fixée ladite canule 20.

L'invention va être décrite ci-après en référence à un cycle complet de l'ensemble de moulage, se référant au moulage d'un corps de seringue 10 sur une canule 20. Il est entendu que l'ensemble de moulage peut comprendre plusieurs sous-ensembles fonctionnant de manière simultanée.

L'ensemble de moulage comprend au moins une unité de moule 100, chaque unité de moule 100 comportant une première partie de moule 110 et une seconde partie de moule 120 déplaçable axialement par rapport à ladite première partie de moule 110 entre une position d'ouverture et une position de fermeture. Dans cette position de fermeture, lesdites première et seconde parties de moule 110, 120 définissent entre elles une cavité de moule 130, et un noyau 140, situé dans ladite cavité de moule 130, définit la forme dudit corps de seringue 10.

L'ensemble de moulage comprend également au moins une unité de pince 200 pour canule 20, chaque unité de pince 200 comportant une pince 210 déplaçable entre une position ouverte, dans laquelle une canule 20 peut être chargée dans une extrémité axiale proximale de ladite pince 210, et une position fermée, dans laquelle ladite canule 20 est maintenue dans ladite pince 210. Ladite unité de pince 200 est déplaçable axialement par rapport à ladite unité de moule 100 pour disposer une canule 20 dans ladite cavité de moule 130. Le déplacement de ladite pince 210 entre ses positions ouverte et fermée est indépendant du déplacement axial desdites première et seconde parties de moule 110, 120 entre lesdites positions d'ouverture et de fermeture de ladite unité de moule 100.

Chaque unité de pince 200 comporte un élément d'actionnement 220 déplaçable axialement entre une position de fermeture et une position d'ouverture, ledit élément d'actionnement 220 étant adapté à déplacer ladite pince 210 entre lesdites positions fermée et ouverte.

Avantageusement, ledit élément d'actionnement 220 comporte une extrémité axiale proximale tronconique 221 coopérant avec une extrémité axiale distale 211 de ladite pince 210. Cette extrémité axiale distale 211 comporte avantageusement une forme creuse conique complémentaire de ladite extrémité axiale proximale tronconique 221 dudit élément d'actionnement 220, de sorte qu'un déplacement axial dudit élément d'actionnement 220 provoque un déplacement radial de ladite pince 210 entre lesdites positions fermée et ouverte. En particulier, lorsque l'élément d'actionnement 220 s'avance axialement dans ladite pince, son extrémité axiale proximale tronconique 221 va glisser dans la forme creuse conique complémentaire de ladite extrémité axiale distale 211 de ladite pince 210, ce qui va provoquer l'écartement radial et donc l'ouverture de ladite pince 210.

Avantageusement, ladite pince 210 est élastiquement sollicitée vers sa position fermée. Ainsi, lorsque l'élément d'actionnement 220 recule axialement hors de ladite pince, celle-ci se referme automatiquement.

Un organe de commande 230, tel qu'un vérin, coopérant avec ledit élément d'actionnement 220 de ladite unité de pince 200 est prévu pour déplacer ledit élément d'actionnement 220 entre ses positions de fermeture et d'ouverture. L'actionnement de cet organe de commande 230 est indépendant de l'ouverture et/ou de la fermeture de l'unité de moule 100.

L'ensemble de moulage comprend en outre une unité de chargement de canule 300 adaptée à charger une canule 20 dans une unité de pince 200. Cette unité de chargement de canule 300 peut être de type conventionnel.

Dans l'exemple représenté sur les figures, l'ensemble de moulage comporte deux unités de moule 100 et deux unités de chargement de canule 300 décalées transversalement, et quatre unités de pince 200 disposée deux à deux sur un bras pendulaire 250, notamment pivotant. Ainsi, pendant que les deux unités de chargement de canule 300 chargent une canule 20 respective dans deux unités de pince, les deux unités de moule 100 moulent chacun un corps de seringue 10 autour d'une canule 20. Puis, le bras pendulaire 250 pivote, et amène d'une part les deux unités de pince 200 chargées avec des canules 20 face aux deux unités de moule 100, et d'autre part ramène les deux autres unités de pince face aux deux unités de chargement de canule 300. Avantageusement, quatre organe de commande 230 sont prévus pour commander séparément et indépendamment les quatre pinces 210. Cette mise en oeuvre avantageuse n'est toutefois pas limitative, et d'autres configurations sont envisageables.

Avantageusement, les premières parties de moule 120 des deux unités de moules sont formées par une même plaque. Avantageusement, les secondes parties de moule 120 des deux unités de moules sont également formées par une même plaque.

Il est à noter que les nombres d'unités de moules 100, d'unités de pince 200 et d'unités de chargement de canule 300 peuvent être quelconques, l'exemple ci-dessus n'étant pas limitatif.

Avantageusement, chaque pince 210 comporte un évidement 215 recevant en toutes positions la pointe de perçage 21 de la canule 20. Ainsi, aucune contrainte n'est exercée sur ladite pointe de perçage 21, ni lors du chargement de ladite canule 20 dans ladite pince 210 par ladite unité de chargement de canule 300, ni lors des déplacements de ladite pince 210, ni lors du moulage dudit corps de seringue 10 autour de ladite canule 20 par ladite unité de moule 100.

Avantageusement, chaque unité de moule 100 comporte un organe de positionnement 150 coopérant avec l'extrémité axiale de la canule 20 opposée à ladite pointe de perçage 21. Ceci permet d'assurer un positionnement précis de ladite canule 20 dans ladite unité de moule 100 pendant le moulage du corps de seringue 10, sans risquer d'abimer la pointe de perçage 21. A cet égard, il est avantageux que la pince 210, en position fermée, permette un léger déplacement axial de la canule 20 par rapport à la pince, notamment par glissement.

Un cycle de fabrication d'un corps de seringue sera décrit ci-après en référence aux figures, pour illustrer le procédé de fabrication.

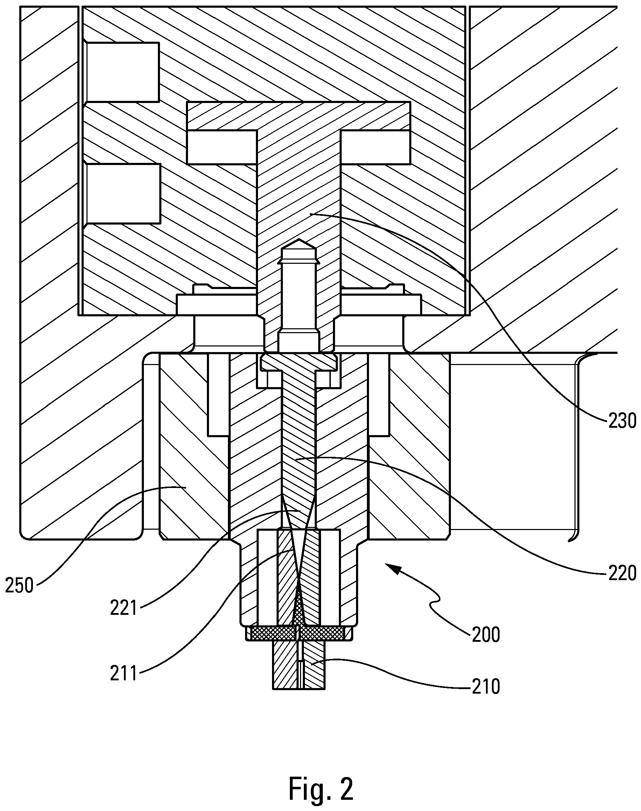

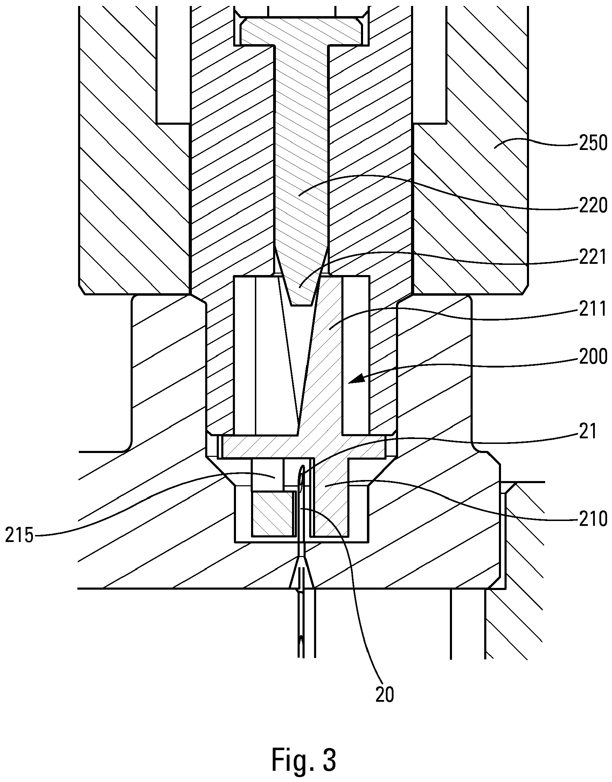

La pince 210, fermée sur la figure 2, est ouverte au moyen d'un élément d'actionnement 220 de ladite unité de pince 200, ledit élément d'actionnement 220 étant commandé par un organe de commande 230, tel qu'un vérin. La position ouverte de la pince est visible sur la figure 3.

Une canule 20 est alors chargée dans ladite pince 210 ouverte au moyen d'une unité de chargement de canule 300.

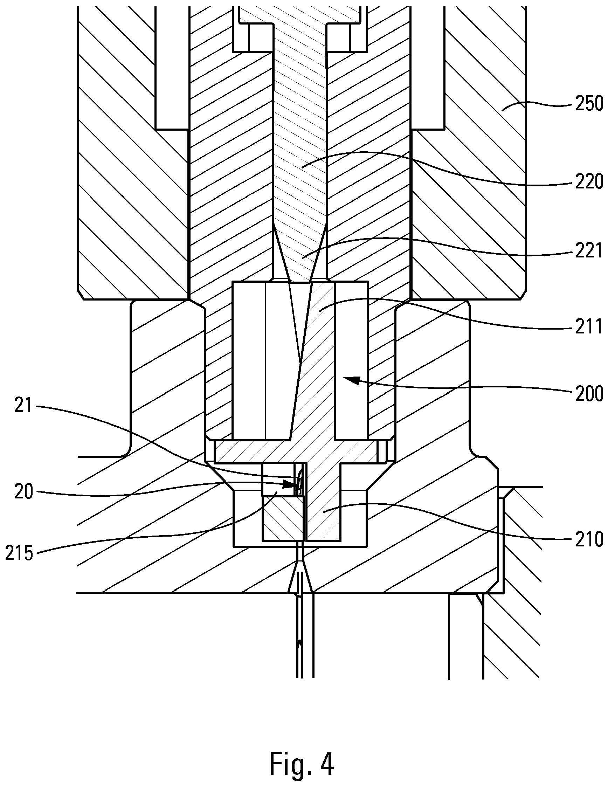

Ladite pince 210 est ensuite refermée sur ladite canule 20, comme représenté sur la figure 4.

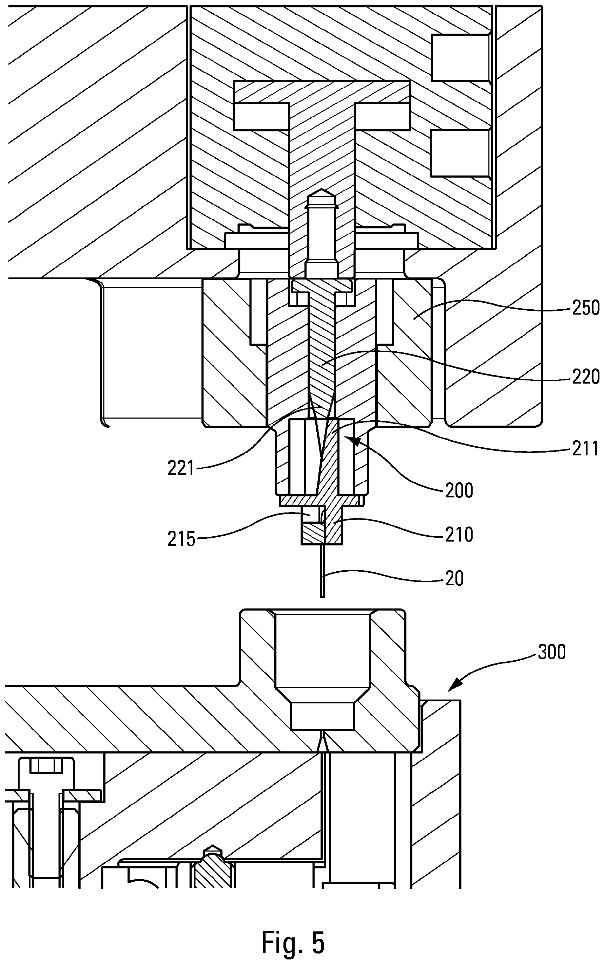

Puis, comme représenté sur la figure 5, ladite unité de pince 200 est éloignée axialement de ladite unité de chargement de canule 300, ladite pince 210 fermée contenant une canule 20 étant disposée en face d'une unité de chargement de canule 300.

Ladite unité de pince 200 contenant ladite canule 20 est alors déplacée latéralement pour venir face à une unité de moule 100.

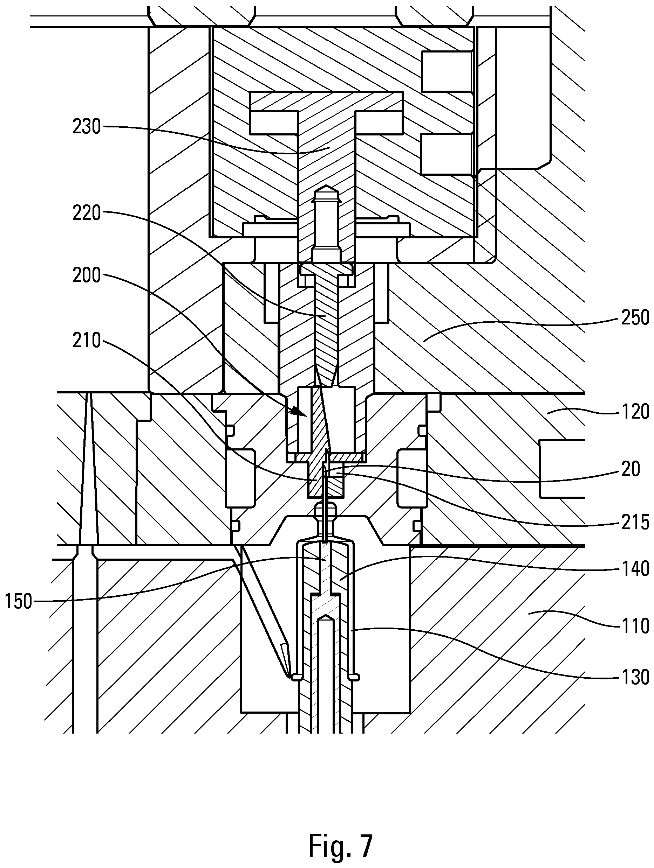

Puis ladite unité de pince 200 contenant ladite canule 20 est déplacée axialement par rapport à ladite unité de moule 100 pour insérer ladite canule 20 dans ladite unité de moule 100. La position avec l'unité de moule 100 fermée contenant ladite canule est représentée sur la figure 7.

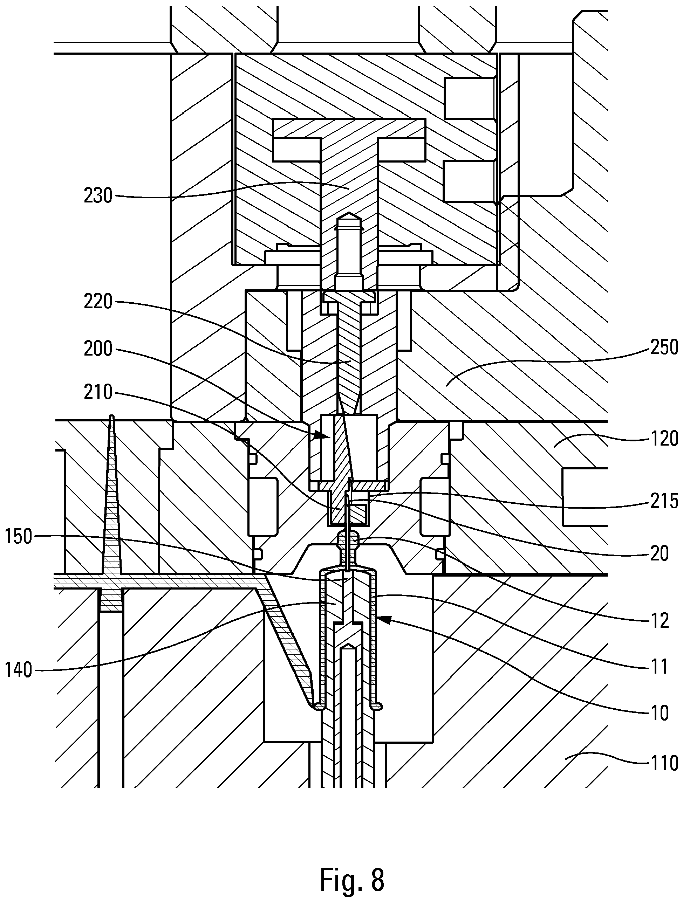

Du matériau synthétique est alors injecté dans ladite unité de moule 100 pour mouler ledit corps de seringue 10 autour de ladite canule 20, comme visible sur la figure 8.

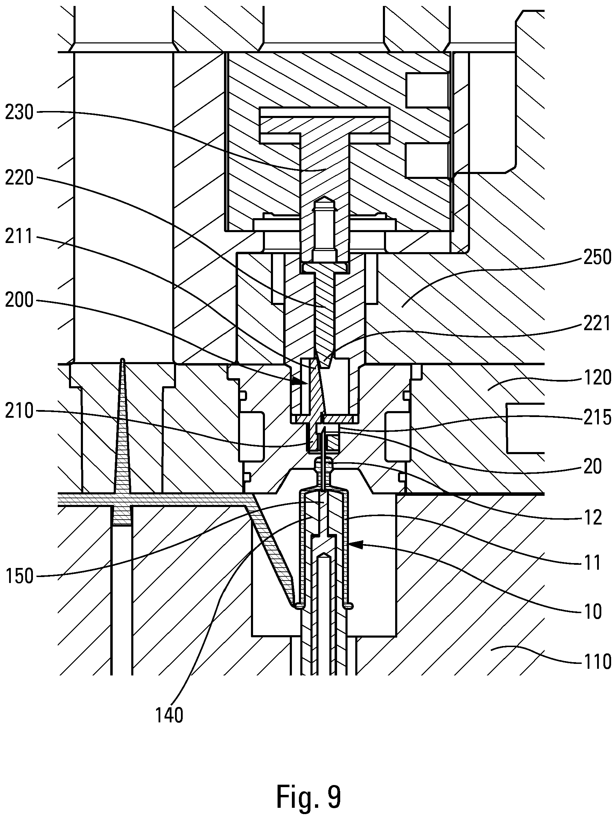

Après moulage, ladite pince 210 est ouverte au moyen dudit élément d'actionnement 220 de ladite unité de pince 200, ledit élément d'actionnement 220 étant commandé par un organe de commande 230, tel qu'un vérin, comme visible sur la figure 9. Cet organe de commande 230 peut être différent de celui ayant ouvert la pince 210 pour le chargement de la canule. Ainsi, ladite étape d'ouvrir la pince 210 pour charger la canule 20 peut être réalisée par un premier organe de commande 230, et ladite étape d'ouvrir ladite pince 210 après moulage dudit corps de seringue 10 peut être réalisée par un second organe de commande 230, lesdits premier et second organes de commande 230 étant actionnés indépendamment l'un de l'autre, et indépendamment des déplacements de ladite unité de moule 100.

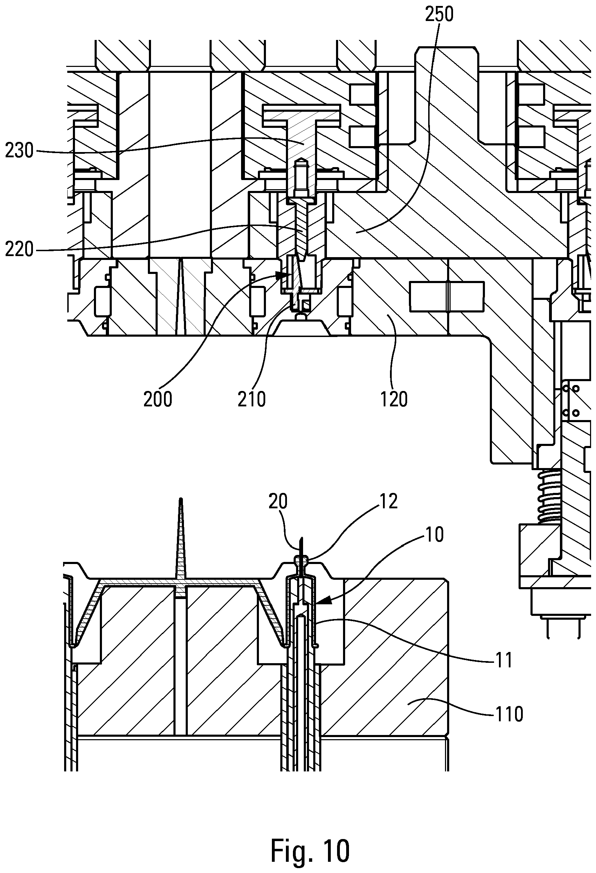

Enfin, ladite unité de moule 100 est ouverte pour éjecter ledit corps de seringue 10 moulé autour de ladite canule 20, comme représenté sur la figure 10.

L'ensemble de moulage est alors prêt pour le prochain cycle.

Comme expliqué précédemment, l'ensemble de moulage représenté sur les figures permet de fabriquer simultanément deux corps de seringue.

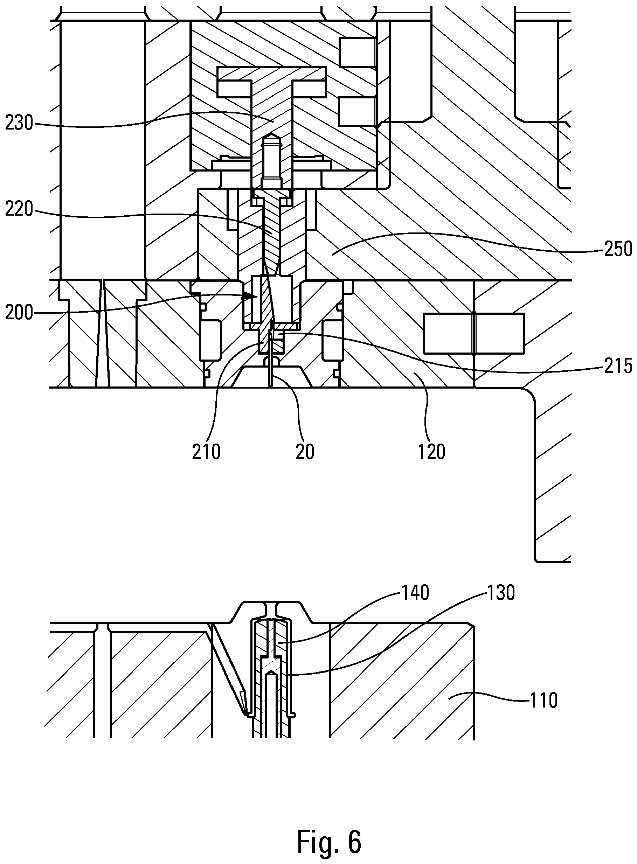

Avantageusement, l'étape de déplacer axialement ladite unité de pince 200 contenant ladite canule 20 par rapport à ladite unité de moule 100 pour insérer ladite canule 20 dans ladite unité de moule 100 est réalisée de la manière suivante:
- ladite unité de moule 100 est d'abord ouverte en déplaçant axialement ladite seconde partie de moule 120 par rapport à ladite première partie de moule 110,
- ladite unité de pince 200 est insérée dans ladite seconde partie de moule 120, comme visible sur la figure 6, et
- ladite unité de moule 100 est refermée en déplaçant axialement ladite seconde partie de moule 120, ensemble avec ladite unité de pince 200, par rapport à ladite première partie de moule 110.

En variante, cette étape de déplacer axialement ladite unité de pince 200 contenant ladite canule 20 par rapport à ladite unité de moule 100 pour insérer ladite canule 20 dans ladite unité de moule 100 peut aussi être réalisée de la manière suivante:
- ladite unité de moule 100 est d'abord fermée en déplaçant axialement ladite seconde partie de moule 120 par rapport à ladite première partie de moule 110, et
- ladite unité de pince 200 contenant ladite canule 20 est déplacée axialement par rapport à ladite unité de moule 100 fermée pour insérer ladite canule 20 dans ladite unité de moule 100.

Avantageusement, ladite au moins une unité de chargement de canule 300 est fixée sur ladite seconde partie de moule 120. Ceci permet de corréler les déplacements de ladite unité de chargement de canule 300 avec les mouvements de ladite seconde partie de moule 120, et ainsi d'améliorer la précision de positionnement de la canule 20 dans la pince 210.

La présente invention permet donc en particulier de fournir les avantages suivants:
- aucun contact n'a lieu avec la pointe de perçage 21 de la canule 20 pendant tout le procédé de fabrication; ceci permet d'éviter tout risque d'endommagement de ladite pointe de perçage;
- le nombre de transferts de la canule 20 est réduit: la canule est chargée dans la pince, et ensuite elle reste maintenue dans cette pince jusqu'à la fin du procédé de moulage du corps de seringue 10 autour de la canule 20; ceci permet aussi de limiter les risques d'endommagement de la canule, notamment en limitant le contact avec des salissures ou des particules; de ce fait, l'exposition de l'aiguille aux contaminations extérieures est fortement limitée;
- la canule peut être très précisément positionnée dans l'unité de moule au moment du moulage du corps de seringue.

Bien que la présente invention ait été décrite en référence à un mode de réalisation avantageux, il est entendu que diverses modifications sont possibles pour l'homme du métier sans sortir du cadre de la présente invention tel que défini par les revendications annexées.

## Revendications

1. Ensemble de moulage pour fabriquer au moins un corps de seringue (10), chaque corps de seringue (10) étant pourvu d'une canule (20), chaque corps de seringue (10) comportant une partie cylindrique (11) et une partie de moyeu (12) sur laquelle est fixée ladite canule (20), **caractérisé en ce que** l'ensemble de moulage comprend :
au moins une unité de moule (100), chaque unité de moule (100) comportant une première partie de moule (110), une seconde partie de moule (120) déplaçable axialement par rapport à ladite première partie de moule (110) entre une position d'ouverture et une position de fermeture, dans laquelle lesdites première et seconde parties de moule (110, 120) définissent entre elles une cavité de moule (130), et un noyau (140) situé dans ladite cavité de moule (130) pour définir la forme dudit corps de seringue (10); et
au moins une unité de pince (200) pour canule (20), chaque unité de pince (200) comportant une pince (210) déplaçable entre une position ouverte, dans laquelle une canule (20) peut être chargée dans une extrémité axiale proximale de ladite pince (210), et une position fermée, dans laquelle ladite canule (20) est maintenue dans ladite pince (210), ladite unité de pince (200) étant déplaçable axialement par rapport à ladite unité de moule (100) pour disposer une canule (20) dans ladite cavité de moule (130), le déplacement de ladite pince (210) entre ses positions ouverte et fermée étant indépendant du déplacement axial desdites première et seconde parties de moule (110, 120) entre les positions d'ouverture et de fermeture de ladite unité de moule (100).

2. Ensemble de moulage selon la revendication 1, dans lequel chaque unité de pince (200) comporte un élément d'actionnement (220) déplaçable axialement entre une position de fermeture et une position d'ouverture, ledit élément d'actionnement (220) étant adapté à déplacer ladite pince (210) entre lesdites positions fermée et ouverte.

3. Ensemble de moulage selon la revendication 2, dans lequel ledit élément d'actionnement (220) comporte une extrémité axiale proximale tronconique (221) coopérant avec une extrémité axiale distale (211) de ladite pince (210), ladite extrémité axiale distale (211) de ladite pince (210) ayant une forme creuse conique complémentaire de ladite extrémité axiale proximale tronconique (221) dudit élément d'actionnement (220), de sorte qu'un déplacement axial dudit élément d'actionnement (220) provoque un déplacement radial de ladite pince (210) entre lesdites positions fermée et ouverte.

4. Ensemble de moulage selon la revendication 2 ou 3, comportant au moins un organe de commande (230), tel qu'un vérin, coopérant avec ledit élément d'actionnement (220) de ladite au moins une unité de pince (200) pour le déplacer entre ses positions de fermeture et d'ouverture.

5. Ensemble de moulage selon l'une quelconque des revendications 2 à 4, dans lequel chaque pince (210) est élastiquement sollicitée vers sa position fermée.

6. Ensemble de moulage selon l'une quelconque des revendications précédentes, comprenant en outre au moins une unité de chargement de canule (300) adaptée à charger une canule (20) respective dans une unité de pince (200) respective.

7. Ensemble de moulage selon la revendication 6, dans lequel ladite au moins une unité de pince (200) est montée sur un bras pendulaire (250) adapté à déplacer transversalement, notamment par pivotement, ladite au moins une unité de pince (200) entre une première position de chargement de canule, dans laquelle ladite au moins une unité de chargement de canule (300) charge une canule (20) respective dans ladite au moins une unité de pince (200), et une seconde position de moulage, dans laquelle ladite au moins une unité de pince (200) est adaptée à disposer ladite canule (20) dans une unité de moule (100) respective.

8. Ensemble de moulage selon la revendication 7, dans lequel ledit ensemble de moulage comprend deux unités de moule (100), deux unités de chargement de canule (300) et quatre unités de pince (200), lesdites quatre unités de pince (200) étant montées deux à deux sur ledit bras pendulaire (250), de telle sorte qu'il y a toujours une unité de pince (200) en face de chaque unité de chargement de canule (300) et de chaque unité de moule (100).

9. Ensemble de moulage selon la revendication 8, dans lequel ledit ensemble de moulage comprend quatre organes de commandes (230), dont chacun coopère avec une première unité de pince (200) dans ladite première position de chargement de canule dudit bras pendulaire (250) et avec une seconde unité de pince (200) dans ladite seconde position de moulage dudit bras pendulaire (250).

10. Ensemble de moulage selon l'une quelconque des revendications 6 à 9, dans lequel ladite au moins une unité de chargement de canule (300) est fixée sur ladite seconde partie de moule (120).

11. Ensemble de moulage selon l'une quelconque des revendications précédentes, dans lequel chaque pince (210) comporte un évidement (215) recevant en toutes positions la pointe de perçage (21) de la canule (20), de sorte qu'aucune contrainte n'est exercée sur ladite pointe de perçage (21) lors du chargement de ladite canule (20) dans ladite pince (210) par ladite unité de chargement de canule (300), lors des déplacements de ladite pince (210) et lors du moulage dudit corps de seringue (10) autour de ladite canule (20) par ladite unité de moule (100).

12. Ensemble de moulage selon l'une quelconque des revendications précédentes, dans lequel chaque unité de moule (100) comporte un organe de positionnement (150) coopérant avec l'extrémité axiale de la canule (20) opposée à ladite pointe de perçage (21) pour assurer un positionnement précis de ladite canule (20) dans ladite unité de moule (100) pendant le moulage du corps de seringue (10).

13. Procédé de fabrication d'un corps de seringue (10) pourvu d'une canule (20), ledit corps de seringue (10) comportant une partie cylindrique (11) et une partie de moyeu (12) sur laquelle est fixée ladite canule (20), **caractérisé en ce que** ledit procédé comporte les étapes suivantes:
- fournir une unité de pince (200) comportant une pince (210) déplaçable entre une position fermée et une position ouverte,
- ouvrir ladite pince (210) au moyen d'un élément d'actionnement (220) de ladite unité de pince (200), ledit élément d'actionnement (220) étant commandé par un organe de commande (230), tel qu'un vérin,
- charger une canule (20) dans ladite pince (210) ouverte au moyen d'une unité de chargement de canule (300),
- fermer ladite pince (210) sur ladite canule (20),
- déplacer latéralement ladite unité de pince (200) contenant ladite canule (20) face à une unité de moule (100) comportant une première partie de moule (110) et une seconde partie de moule (120) déplaçable axialement par rapport à ladite première partie de moule (110) entre une position d'ouverture et une position de fermeture, dans laquelle lesdites première et seconde parties de moule (110, 120) définissent entre elles une cavité de moule (130), un noyau (140) étant situé dans ladite cavité de moule (130) pour définir la forme dudit corps de seringue (10),
- déplacer axialement ladite unité de pince (200) contenant ladite canule (20) par rapport à ladite unité de moule (100) pour insérer ladite canule (20) dans ladite unité de moule (100),
- injecter du matériau synthétique dans ladite unité de moule (100) pour mouler ledit corps de seringue (10) autour de ladite canule (20),
- ouvrir ladite pince (210) au moyen dudit élément d'actionnement (220) de ladite unité de pince (200), ledit élément d'actionnement (220) étant commandé par un organe de commande (230), tel qu'un vérin, et
- ouvrir ladite unité de moule (100) pour éjecter ledit corps de seringue (10) moulé autour de ladite canule (20).

14. Procédé selon la revendication 13, dans lequel ladite étape de déplacer axialement ladite unité de pince (200) contenant ladite canule (20) par rapport à ladite unité de moule (100) pour insérer ladite canule (20) dans ladite unité de moule (100) est réalisée de la manière suivante:
- ouvrir ladite unité de moule (100) en déplaçant axialement ladite seconde partie de moule (120) par rapport à ladite première partie de moule (110),
- insérer ladite unité de pince (200) dans ladite seconde partie de moule (120), et
- fermer ladite unité de moule (100) en déplaçant axialement ladite seconde partie de moule (120) ensemble avec ladite unité de pince (200) par rapport à ladite première partie de moule (110).

15. Procédé selon la revendication 13, dans lequel ladite étape de déplacer axialement ladite unité de pince (200) contenant ladite canule (20) par rapport à ladite unité de moule (100) pour insérer ladite canule (20) dans ladite unité de moule (100) est réalisée de la manière suivante:
- fermer ladite unité de moule (100) en déplaçant axialement ladite seconde partie de moule (120) par rapport à ladite première partie de moule (110), et
- déplacer axialement ladite unité de pince (200) contenant ladite canule (20) par rapport à ladite unité de moule (100) fermée pour insérer ladite canule (20) dans ladite unité de moule (100).

16. Procédé selon l'une quelconque des revendications 13 à 15, dans lequel ladite étape de déplacer latéralement ladite unité de pince (200) contenant ladite canule (20) est réalisée au moyen d'un bras pendulaire (250), notamment pivotant.

17. Procédé selon l'une quelconque des revendications 13 à 16, dans lequel en position fermée de ladite pince (210), ladite canule (20) peut être déplacée axialement par rapport à ladite pince (210).

18. Procédé selon la revendication 17, dans lequel lorsque ladite canule (20) est insérée dans ladite unité de moule (100), l'extrémité axiale de ladite canule (20) opposée à ladite pointe de perçage (21) coopère avec un organe de positionnement (150) de ladite unité de moule (100) pour assurer un positionnement précis de ladite canule (20) dans ladite unité de moule (100) pendant le moulage du corps de seringue (10).

19. Procédé selon l'une quelconque des revendications 13 à 18, dans lequel ladite pince (210) comporte un évidement (215) recevant en toutes positions la pointe de perçage (21) de la canule (20), de sorte qu'aucune contrainte n'est exercée sur ladite pointe de perçage (21) lors du chargement de ladite canule (20) dans ladite pince (210) par ladite unité de chargement de canule (300), lors des déplacements de ladite pince (210) et lors du moulage dudit corps de seringue (10) autour de ladite canule (20) par ladite unité de moule (100).

20. Procédé selon l'une quelconque des revendications 13 à 19, dans lequel ladite étape d'ouvrir ladite pince (210) pour charger ladite canule (20) est réalisée par un premier organe de commande (230) et ladite étape d'ouvrir ladite pince (210) après moulage dudit corps de seringue (10) est réalisée par un second organe de commande (230), lesdits organes de commande (230) étant actionnés indépendamment l'un de l'autre, et indépendamment des déplacements de ladite unité de moule (100).

21. Procédé selon l'une quelconque des revendications 13 à 20, dans lequel ladite étape de fermer ladite pince (210) est réalisée automatiquement, ladite pince (210) étant élastiquement sollicitée vers sa position fermée.

## Patentansprüche

1. Formungsaufbau zum Herstellen mindestens eines Spritzenkörpers (10), wobei jeder Spritzenkörper (10) mit einer Hohlnadel (20) versehen ist, wobei jeder Spritzenkörper (10) einen zylindrischen Teil (11) und einen Nabenteil (12) umfasst, auf dem die Hohlnadel (20) befestigt ist, **dadurch gekennzeichnet, dass** der Formungsaufbau umfasst:
mindestens eine Formeinheit (100), wobei jede Formeinheit (100) ein erstes Formteil (110), ein zweites Formteil (120), das in Bezug auf das erste Formteil (110) zwischen einer Öffnungsposition und einer Schließposition axial verschiebbar ist, wobei das erste und das zweite Formteil (110, 120) zwischen sich einen Formhohlraum (130) definieren, und einen Kern (140) umfasst, der sich in dem Formhohlraum (130) befindet, um die Form des Spritzenkörpers (10) zu definieren; und
mindestens eine Klemmeinheit (200) für die Hohlnadel (20), wobei jede Klemmeinheit (200) eine Klemme (210) umfasst, die zwischen einer geöffneten Position, in der eine Hohlnadel (20) in ein axiales, zur Klemme (210) proximales Ende beschickt werden kann, und einer geschlossenen Position, in der die Hohlnadel (20) in der Klemme (210) gehalten wird, verschiebbar ist, wobei die Klemmeinheit (200) in Bezug auf die Formeinheit (100) axial verschiebbar ist, um eine Hohlnadel (20) in dem Formhohlraum (130) anzuordnen, wobei die Verschiebung der Klemme (210) zwischen ihrer geöffneten und ihrer geschlossenen Position von der axialen Verschiebung des ersten und des zweiten Formteils (110, 120) zwischen der Öffnungsposition und der Schließposition der Formeinheit (100) unabhängig ist.

2. Formungsaufbau nach Anspruch 1, wobei jede Klemmeinheit (200) ein Betätigungselement (220) umfasst, das zwischen einer Schließposition und einer Öffnungsposition axial verschiebbar ist, wobei das Betätigungselement (220) dazu geeignet ist, die Klemme (210) zwischen der geschlossenen und der geöffneten Position zu verschieben.

3. Formungsaufbau nach Anspruch 2, wobei das Betätigungselement (220) ein axiales, proximales, kegelstumpfartiges Ende (221) umfasst, das mit einem axialen distalen Ende (211) der Klemme (210) zusammenwirkt, wobei das axiale distale Ende (211) der Klemme (210) eine konische Hohlform aufweist, die zum axialen, proximalen, kegelstumpfartigen Ende (221) des Betätigungselements (220) komplementär ist, so dass eine axiale Verschiebung des Betätigungselements (220) eine radiale Verschiebung der Klemme (210) zwischen der geschlossenen Position und der geöffneten Position bewirkt.

4. Formungsaufbau nach Anspruch 2 oder 3, umfassend mindestens eine Steuereinrichtung (230), wie einen Zylinder, die mit dem Betätigungselement (220) der mindestens einen Klemmeinheit (200) zusammenwirkt, um es zwischen seiner Schließposition und seiner Öffnungsposition zu verschieben.

5. Formungsaufbau nach einem der vorhergehenden Ansprüche 2 bis 4, wobei jede Klemme (210) gegen ihre geschlossene Position elastisch vorgespannt ist.

6. Formungsaufbau nach einem der vorhergehenden Ansprüche, des Weiteren umfassend mindestens eine Hohlnadel-Beschickungseinheit (300), die dazu geeignet ist, jeweils eine Hohlnadel (20) in jeweils eine Klemmeinheit (200) zu beschicken.

7. Formungsaufbau nach Anspruch 6, wobei die mindestens eine Klemmeinheit (200) auf einem Pendelarm (250) montiert ist, der dazu geeignet ist, die mindestens eine Klemmeinheit (200) zwischen einer ersten Position, der Hohlnadel-Beschickungsposition, in der die mindestens eine Hohlnadel-Beschickungseinheit (300) jeweils eine Hohlnadel (20) in die mindestens eine Klemmeinheit (200) beschickt, und einer zweiten Position, der Formungsposition, in der die mindestens eine Klemmeinheit (200) dazu geeignet ist, die Hohlnadel (20) in jeweils einer Formeinheit (100) anzuordnen, insbesondere durch Verschwenken quer zu verschieben.

8. Formungsaufbau nach Anspruch 7, wobei der Formungsaufbau zwei Formeinheiten (100), zwei Hohlnadel-Beschickungseinheiten (300) und vier Klemmeinheiten (200) umfasst, wobei die vier Klemmeinheiten (200) jeweils paarweise auf dem Pendelarm (250) montiert sind, so dass immer eine Klemmeinheit (200) gegenüber jeder Hohlnadel-Beschickungseinheit (300) und jeder Formeinheit (100) vorhanden ist.

9. Formungsaufbau nach Anspruch 8, wobei der Formungsaufbau vier Steuereinrichtungen (230) umfasst, von denen jede mit einer ersten Klemmeinheit (200) in der ersten, der Hohlnadel-Beschickungsposition des Pendelarms (250) und mit einer zweiten Klemmeinheit (200) in der zweiten, der Formungsposition des Pendelarms (250) zusammenwirkt.

10. Formungsaufbau nach einem der Ansprüche 6 bis 9, wobei die mindestens eine Hohlnadel-Beschickungseinheit (300) auf dem zweiten Formteil (120) befestigt ist.

11. Formungsaufbau nach einem der vorhergehenden Ansprüche, wobei jede Klemme (210) eine Vertiefung (215) umfasst, die in allen Positionen die Durchstechspitze (21) der Hohlnadel (20) aufnimmt, so dass beim Beschicken der Hohlnadel (20) in die Klemme (210) durch die Hohlnadel-Beschickungseinheit (300), bei den Verschiebungen der Klemme (210) und beim Formen des Spritzenkörpers (10) um die Hohlnadel (20) durch die Formeinheit (100) keine Belastung auf die Durchstechspitze (21) ausgeübt wird.

12. Formungsaufbau nach einem der vorhergehenden Ansprüche, wobei jede Formeinheit (100) eine Positionierungseinrichtung (150) umfasst, die mit dem axialen Ende der Hohlnadel (20) gegenüber der Durchstechspitze (21) zusammenwirkt, um während des Formens des Spritzenkörpers (10) eine genaue Positionierung der Hohlnadel (20) in der Formeinheit (100) zu gewährleisten.

13. Herstellungsverfahren für einen Spritzenkörper (10), der mit einer Hohlnadel (20) versehen ist, wobei der Spritzenkörper (10) einen zylindrischen Teil (11) und einen Nabenteil (12) umfasst, auf dem die Hohlnadel (20) befestigt ist, **dadurch gekennzeichnet, dass** das Verfahren die folgenden Schritte umfasst:
- Bereitstellen einer Klemmeinheit (200), umfassend eine Klemme (210), die zwischen einer geschlossenen Position und einer geöffneten Position verschiebbar ist,
- Öffnen der Klemme (210) mittels eines Betätigungselements (220) der Klemmeinheit (200), wobei das Betätigungselement (220) durch eine Steuereinrichtung (230), wie einen Zylinder, gesteuert wird,
- Beschicken einer Hohlnadel (20) in die offene Klemme (210) mittels einer Hohlnadel- Beschickungseinheit (300),
- Schließen der Klemme (210) auf der Hohlnadel (20),
- seitliches Verschieben der Klemmeinheit (200), die die Hohlnadel (20) enthält, gegenüber einer Formeinheit (100), die ein erstes Formteil (110) und ein zweites Formteil (120), das in Bezug auf das erste Formteil (110) zwischen einer Öffnungsposition und einer Schließposition axial verschiebbar ist, enthält, wobei das erste und das zweite Formteil (110, 120) einen Formhohlraum (130) zwischen sich definieren, wobei sich ein Kern (140) in dem Formhohlraum (130) befindet, um die Form des Spritzenkörpers (10) zu definieren,
- axiales Verschieben der Klemmeinheit (200), die die Hohlnadel (20) enthält, in Bezug auf die Formeinheit (100), um die Hohlnadel (20) in die Formeinheit (100) einzufügen,
- Einspritzen von Kunststoffmaterial in die Formeinheit (100), um den Spritzenkörper (10) um die Hohlnadel (20) zu formen,
- Öffnen der Klemme (210) mittels des Betätigungselements (220) der Klemmeinheit (200), wobei das Betätigungselement (220) durch eine Steuereinrichtung (230), wie einen Zylinder, gesteuert wird, und
- Öffnen der Formeinheit (100), um den Spritzenkörper (10), der um die Hohlnadel (20) geformt ist, auszustoßen.

14. Verfahren nach Anspruch 13, wobei der Schritt des axialen Verschiebens der Klemmeinheit (200), die die Hohlnadel (20) enthält, in Bezug auf die Formeinheit (100), um die Hohlnadel (20) in die Formeinheit (100) einzufügen, auf folgende Art und Weise umgesetzt wird:
- Öffnen der Formeinheit (100) unter axialer Verschiebung des zweiten Formteils (120) in Bezug auf das erste Formteil (110),
- Einfügen der Klemmeinheit (200) in das zweite Formteil (120), und
- Schließen der Formeinheit (100) unter axialer Verschiebung des zweiten Formteils (120) zusammen mit der Klemmeinheit (200) in Bezug auf das erste Formteil (110).

15. Verfahren nach Anspruch 13, wobei der Schritt des axialen Verschiebens der Klemmeinheit (200), die die Hohlnadel (20) enthält, in Bezug auf die Formeinheit (100), um die Hohlnadel (20) in die Formeinheit (100) einzufügen, auf folgende Art und Weise umgesetzt wird:
- Schließen der Formeinheit (100) unter axialer Verschiebung des zweiten Formteils (120) in Bezug auf das erste Formteil (110), und
- axiales Verschieben der Klemmeinheit (200), die die Hohlnadel (20) enthält, in Bezug auf die geschlossene Formeinheit (100), um die Hohlnadel (20) in die Formeinheit (100) einzufügen.

16. Verfahren nach einem der Ansprüche 13 bis 15, wobei der Schritt des seitlichen Verschiebens der Klemmeinheit (200), die die Hohlnadel (20) enthält, mittels eines, insbesondere verschwenkbaren, Pendelarms (250) umgesetzt wird.

17. Verfahren nach einem der Ansprüche 13 bis 16, wobei die Hohlnadel (20) in der geschlossenen Position der Klemme (210) in Bezug auf die Klemme (210) axial verschoben werden kann.

18. Verfahren nach Anspruch 17, wobei, wenn die Hohlnadel (20) in der Formeinheit (100) eingefügt ist, das axiale Ende der Hohlnadel (20) gegenüber der Durchstechspitze (21) mit einer Positionierungseinrichtung (150) der Formeinheit (100) zusammenwirkt, um eine genaue Positionierung der Hohlnadel (20) in der Formeinheit (100) während des Formens des Spritzenkörpers (10) zu gewährleisten.

19. Verfahren nach einem der Ansprüche 13 bis 18, wobei die Klemme (210) eine Vertiefung (215) umfasst, die in allen Positionen die Durchstechspitze (21) der Hohlnadel (20) aufnimmt, so dass beim Beschicken der Hohlnadel (20) in die Klemme (210) durch die Hohlnadel-Beschickungseinheit (300), bei den Verschiebungen der Klemme (210) und beim Formen des Spritzenkörpers (10) um die Hohlnadel (20) von der Formeinheit (100) keine Belastung auf die Durchstechspitze (21) ausgeübt wird.

20. Verfahren nach einem der Ansprüche 13 bis 19, wobei der Schritt des Öffnens der Klemme (20), um die Hohlnadel (20) zu beschicken, durch eine erste Steuereinrichtung (230) umgesetzt wird, und der Schritt des Öffnens der Klemme (210) nach dem Formen des Spritzenkörpers (10) durch eine zweite Steuereinrichtung (230) umgesetzt wird, wobei die Steuereinrichtungen (230) unabhängig voneinander und unabhängig von den Verschiebungen der Formeinheit (100) betätigt werden.

21. Verfahren nach einem der Ansprüche 13 bis 20, wobei der Schritt des Schließens der Klemme (210) automatisch erfolgt, wobei die Klemme (210) elastisch gegen ihre geschlossene Position vorgespannt wird.

## Claims

1. A molding assembly for manufacturing at least one syringe barrel (10), each syringe barrel (10) being provided with a cannula (20), each syringe barrel (10) comprising a cylindrical portion (11) and a hub portion (12) to which said cannula (20) is fastened, the molding assembly being **characterized in that** it comprises:
• at least one mold unit (100), each mold unit (100) comprising a first mold portion (110), a second mold portion (120) that is axially movable relative to said first mold portion (110) between an open position and a closed position in which said first and second mold portions (110, 120) co-operate with each other to define a mold cavity (130) between them, and a core (140) that is situated in said mold cavity (130) so as to define the shape of said syringe barrel (10); and
• at least one clip unit (200) for clipping the cannula (20), each clip unit (200) comprising a clip (210) that is movable between an open position in which a cannula (20) can be loaded in a proximal axial end of said clip (210), and a closed position in which said cannula (20) is held in said clip (210), said clip unit (200) being axially movable relative to said mold unit (100) so as to arrange a cannula (20) in said mold cavity (130), the movement of said clip (210) between its open and closed positions being independent of the axial movement of said first and second mold portions (110, 120) between the open and closed positions of said mold unit (100).

2. A molding assembly according to claim 1, wherein Each clip unit (200) includes an actuator element (220) that is axially movable between a closed position and an open position, said actuator element (220) being adapted to move said clip (210) between said closed and open positions.

3. A molding assembly according to claim 2, wherein said actuator element (220) includes a frustoconical proximal axial end (221) that co-operates with a distal axial end (211) of said clip (210), said distal axial end (211) of said clip (210) having a hollow conical shape that is complementary to said frustoconical proximal axial end (221) of said actuator element (220), such that axial movement of said actuator element (220) causes radial movement of said clip (210) between said closed and open positions.

4. A molding assembly according to claim 2 or claim 3, including at least one control member (230), such as a jack, that co-operates with said actuator element (220) of said at least one clip unit (200), so as to move said actuator element between its closed and open positions.

5. A molding assembly according to any one of claims 2 to 4, wherein each clip (210) is urged resiliently towards its closed position.

6. A molding assembly according to any preceding claim, further comprising at least one cannula-loading unit (300) that is adapted to load a respective cannula (20) into a respective clip unit (200).

7. A molding assembly according to claim 6, wherein said at least one clip unit (200) is mounted on a pendular arm (250) that is adapted to move said at least one clip unit (200) transversally, in particular by pivoting, between a cannula-loading first position in which said at least one cannula-loading unit (300) loads a respective cannula (20) in said at least one clip unit (200), and a molding second position in which said at least one clip unit (200) is adapted to arrange said cannula (20) in a respective mold unit (100).

8. A molding assembly according to claim 7, wherein said molding assembly includes two mold units (100), two cannula-loading units (300), and four clip units (200), said four clip units (200) being mounted in pairs on said pendular arm (250), such that there is always one clip unit (200) facing each cannula-loading unit (300) and each mold unit (100).

9. A molding assembly according to claim 8, wherein said molding assembly further includes control members (230), each of which co-operates with a first clip unit (200) in said cannula-loading first position of said pendular arm (250), and with a second clip unit (200) in said molding second position of said pendular arm (250).

10. A molding assembly according to any one of claims 6 to 9, wherein said at least one cannula-loading unit (300) is fastened on said second mold portion (120).

11. A molding assembly according to any preceding claim, wherein each clip (210) includes a recess (215) that receives the perforating tip (21) of the cannula (20) in all positions, such that no stress is exerted on said perforating tip (21) while loading said cannula (20) into said clip (210) by said cannula-loading unit (300), while moving said clip (210), and while molding said syringe barrel (10) around said cannula (20) by said mold unit (100).

12. A molding assembly according to any preceding claim, wherein each mold unit (100) includes a positioner member (150) that co-operates with the axial end of the cannula (20) that is remote from said perforating tip (21), so as to ensure that said cannula (20) is positioned accurately in said mold unit (100) while molding the syringe barrel 10.

13. A method of manufacturing a syringe barrel (10) provided with a cannula (20), said syringe barrel (10) comprising a cylindrical portion (11) and a hub portion (12) on which said cannula (20) is fastened, the manufacturing method being **characterized in that** it comprises the following steps:
• providing a clip unit (200) including a clip (210) that is movable between a closed position and an open position;
• opening said clip (210) by means of an actuator element (220) of said clip unit (200), said actuator element (220) being controlled by a control member (230), such as a jack;
• loading a cannula (20) into said open clip (210) by means of a cannula-loading unit (300);
• closing said clip (210) on said cannula (20);
• moving said clip unit (200) containing said cannula (20) sideways to face a mold unit (100) comprising a first mold portion (110) and a second mold portion (120) that is axially movable relative to said first mold portion (110) between an open position and a closed position in which said first and second mold portions (110, 120) co-operate with each other to define a mold cavity (130) between them, a core (140) being situated in said mold cavity (130) so as to define the shape of said syringe barrel (10);
• moving said clip unit (200) containing said cannula (20) axially relative to said mold unit, so as to insert said cannula (20) into said mold unit (100);
• injecting synthetic material into said mold unit (100) so as to mold said syringe barrel (10) around said cannula (20);
• opening said clip (210) by means of said actuator element (220) of said clip unit (200), said actuator element (220) being controlled by a control member (230), such as a jack; and
• opening said mold unit (100) so as to eject said syringe barrel (10) molded around said cannula (20).

14. A method according to claim 13, wherein said step of moving said clip unit (200) containing said cannula (20) axially relative to said mold unit (100) so as to insert said cannula (20) into said mold unit (100) is performed as follows:
• opening said mold unit (100) by moving said second mold portion (120) axially relative to said first mold portion (110);
• inserting said clip unit (200) into said second mold portion (120); and
• closing said mold unit (100) by moving said second mold portion (120), together with said clip unit (200), axially relative to said first mold portion (110).

15. A method according to claim 13, wherein said step of moving said clip unit (200) containing said cannula (20) axially relative to said mold unit (100) so as to insert said cannula (20) into said mold unit (100) is performed as follows:
• closing said mold unit (100) by moving said second mold portion (120) axially relative to said first mold portion (110); and
• moving said clip unit (200) containing said cannula (20) axially relative to said closed mold unit (100) so as to insert said cannula (20) into said mold unit (100).

16. A method according to any one of claims 13 to 15, wherein said step of moving said clip unit (200) containing said cannula (20) sideways is performed by means of a pendular arm (250), in particular pivotally mounted.

17. A method according to any one of claims 13 to 16, wherein in the closed position of said clip (210), said cannula (20) may be moved axially relative to said clip (210).

18. A method according to claim 17, wherein, when said cannula (20) is inserted into said mold unit (100), the axial end of said cannula (20) that is remote from said perforating tip (21) co-operates with a positioner member (150) of said mold unit (100), so as to ensure that said cannula (20) is positioned accurately in said mold unit (100) while molding the syringe barrel (10).

19. A method according to any one of claims 13 to 18, wherein said clip (210) includes a recess (215) that receives the perforating tip (21) of the cannula (20) in all positions, such that no stress is exerted on said perforating tip (21) while loading said cannula (20) into said clip (210) by said cannula-loading unit (300), while moving said clip (210), and while molding said syringe barrel (10) around said cannula (20) by said mold unit (100).

20. A method according to any one of claims 13 to 19, wherein said step of opening said clip (210) so as to load said cannula (20) is performed by a first control member (230), and said step of opening said clip (210) after molding said syringe barrel (10) is performed by a second control member (230), said control members (230) being actuated independently of each other, and independently of the movements of said mold unit (100).

21. A method according to any one of claims 13 to 20, wherein said step of closing said clip (210) is performed automatically, said clip (210) being urged resiliently towards its closed position.
